# EUROPEAN PATENT SPECIFICATION

(11) **EP 4 188 737 B1**
(45) Date of publication and mention of the grant of the patent: **10.07.2024**
(21) Application number: 21749609.0
(22) Date of filing: 27.07.2021
(51) Int. Cl.: B60K 17/08, B60K 17/02, B60K 1/02, F16H 3/091

(54) **TRANSMISSION UNIT, TRANSMISSION ARRANGEMENT AND VEHICLE POWERTRAIN**
GETRIEBEEINHEIT, GETRIEBEANORDNUNG UND FAHRZEUGANTRIEBSSTRANG
BOÎTE DE VITESSES, AGENCEMENT DE BOÎTE DE VITESSES ET GROUPE MOTOPROPULSEUR DE VÉHICULE

(30) Priority: 29.07.2020 SE 2050926
(43) Date of publication of application: 07.06.2023
(73) Proprietor: Scania CV AB, 151 87 Södertälje (SE); MAN Truck & Bus SE, 80995 München (DE)
(72) Inventor: KARLSSON, Stefan, 645 61 Stallarholmen (SE); FORSBERG, Jörgen, 647 35 Mariefred (SE); LÖFWALL, Tomas, 120 52 Årsta (SE); ARNELÖF, Per, 136 66 Vendelsö (SE); MÜLLER, Tobias, 81375 Munich (DE)
(74) Representative: Bjerkén Hynell KB
(86) International application number: PCT/EP2021/070925
(87) International publication number: WO 2022/023303

(56) References cited:
- EP-A1- 3 521 092
- WO-A1-2018/130101
- WO-A1-2021/121594
- CN-A- 110 203 069
- US-A1- 2019 135 101
- US-A1- 2020 096 084

## Description

### TECHNICAL FIELD

The present disclosure relates in general to a transmission unit and a transmission arrangement comprising such a transmission unit. The present disclosure further relates in general to a vehicle powertrain and to a vehicle.

### BACKGROUND

There is an ongoing strive today for development of electrically driven commercial vehicles, for example for environmental reasons. An electrically driven vehicle may have a vehicle powertrain of different configurations. For example, the vehicle powertrain may have a central drive configuration wherein the electrical machine is connected via a transmission unit and a propeller shaft to the wheel axle and driving wheels in a manner similar to the configuration of a conventional powertrain wherein the propulsion unit is a combustion engine. Vehicle powertrains wherein the electrical machine directly or indirectly drives the wheel axle, without any intermediate propeller shaft, are also known. The electrical machine and a transmission unit may for example be arranged on the wheel axle. Such powertrains have an electric axle configuration. In order to enable an electric axle configuration, it is important to reduce the size of the transmission and the electrical machine, since the available space for accommodating these components is limited.

Vehicle manufacturers are today faced with the problem of meeting a large variety of end user requirements for the vehicles produced. Modularization is a strategy that may be used to improve the ability of a vehicle manufacturer to efficiently provide end users, i.e. costumers, with a high variety of customized products. The modularization concept aims at providing the highest possible customer variety in the products with minimal number of items, given defined customer applications.

Examples of transmission units are disclosed in EP3521092A1 and CN110203069A.

### SUMMARY

The object of the present invention is to provide a modular transmission unit, for an electric vehicle powertrain, that may be adapted to meet various end user requirements.

The object is achieved by means of the subject matter of the appended independent claim(s).

In accordance with the present disclosure, a transmission unit for a vehicle powertrain is provided. The transmission unit comprises a first transmission shaft configured to function as an input shaft of the transmission unit. The first transmission shaft comprises a first gear wheel. The transmission unit further comprises a second transmission shaft comprising a second gear wheel and a third gear wheel. The second gear wheel is arranged to cooperate with the first gear wheel of the first transmission shaft. The transmission unit further comprises a third transmission shaft comprising a fourth gear wheel. The fourth gear wheel is arranged to cooperate with the third gear wheel of the second transmission shaft. The third transmission shaft further comprises a fifth gear wheel arranged to be selectively connectable to the third transmission shaft for rotation with the third transmission shaft. The fifth gear wheel is arranged to cooperate with the second gear wheel of the second transmission shaft. The transmission unit comprises only two gear rows that are capable of transferring driving torque from a propulsion unit to driving wheels of the vehicle powertrain (2) when the transmission unit is arranged in the vehicle powertrain, wherein the first gear row of the two gear rows is defined by the first gear wheel, the second gear wheel and the fifth gear wheel, and the second gear row of the two gear rows is defined by the third gear wheel and the fourth gear wheel (17).

The transmission unit according to the present invention can be used both for central drive configurations and electric axle configurations, since it is configured so as to fit the available design space for both central axis and electric axle usage. In view of the configuration of the transmission unit, it will be relatively compact in a first direction parallel to the rotational axis of the first transmission shaft, but at the same time have a sufficient extension in a second direction, perpendicular to the first direction, such that it may easily be connected to a propulsion unit in the form of an electrical machine and at the same time being connected to a propeller shaft, a further gearbox unit or a wheel axle via a final gear set and differential. Described differently, the configuration of the transmission unit is adapted to the form factor of an electrical machine needed for propulsion of a vehicle, in particular a heavy vehicle such as a truck or the like. The configuration of the transmission unit also provides the possibility to include an additional electrical machine in the vehicle powertrain, if desired. At the same time, the transmission unit can easily be adapted to fit the requirements of an end user, such as requirements regarding power take-offs and/or connection to retarder, or connection to other auxiliaries. The transmission unit also reduces the number of constituent components needed for adapting the transmission unit to end user requirements. In

other words, the main components can be shared between central drive and electric axle configurations leading to an increased possibility for standardization of the constituent components and modularization. Thus, by means of the present transmission unit, a modular transmission unit and thus a modular powertrain platform dedicated for fully electric vehicles are enabled.

The transmission unit may further comprise a coupling device configured to selectively couple the fifth gear wheel to the third transmission shaft.

The coupling device may further be configured to selectively couple the fourth gear wheel to the third transmission shaft. Thereby, there transmission unit need not comprise any further coupling devices, which in turn minimizes the number of constituent components needed in the transmission unit.

The third transmission shaft may be configured to function as an output shaft of the transmission unit. The first transmission shaft and the third transmission shaft may be arranged such that the input shaft and the output shaft of the transmission unit extend out of the transmission unit in the same direction. Thereby, the transmission unit can easily be incorporated in a vehicle powertrain having a central drive configuration as well as a vehicle powertrain having an electric axle configuration, while at the same time provide room in a vehicle powertrain for the other desired components of the vehicle powertrain such as number of electrical machines and possible additional gearbox units.

The transmission comprises only two gear rows that are capable of transferring driving torque from a propulsion unit to driving wheels of the vehicle powertrain, when the transmission unit is arranged in the vehicle powertrain. In such a case, the first gear row of the two gear rows is defined by the first gear wheel, the second gear wheel and the fifth gear wheel, and the second gear row of the two gear rows is defined by the third gear wheel and the fourth gear wheel. This results in the transmission unit having a very compact design, wherein its extension in a first direction parallel to the rotational axis of the first transmission shaft is relatively short. This further improves its ability to be utilized in a vehicle powertrain having an electric axle configuration since it is configured so as to fit the available design space. This in turn improves the possibility for modularization since it can also easily be incorporated into a vehicle powertrain having a central drive configuration.

The present invention further relates to a transmission arrangement for a vehicle powertrain. The transmission arrangement comprises the transmission unit as described above, and a planetary gearbox unit connected to the third transmission shaft of the transmission unit. Thereby, a four-speed transmission arrangement for a vehicle powertrain may be provided. This in turn increases the ability to meet end user requirements for heavy vehicles.

The transmission arrangement may further comprise a final gear set configured to connect the transmission arrangement to a wheel axle of a vehicle powertrain via a differential, the final gear set arranged at an output shaft of the planetary gearbox unit. Thereby, the transmission arrangement may be incorporated in a vehicle powertrain having an electric axle configuration.

The transmission arrangement may further comprise a final gear set configured to connect the transmission arrangement to a wheel axle of a vehicle powertrain via a differential, the final gear seat arranged at an output shaft of the secondary gearbox unit, wherein the output shaft of the secondary gearbox is arranged between the transmission arrangement and the secondary gearbox unit, such that the output shaft is directed towards the transmission arrangement. Thereby, an alternative arrangement is obtained that may facilitate the arrangement of the powertrain in the vehicle.

Furthermore, in accordance with the present invention, a vehicle powertrain is provided. The vehicle powertrain comprises the transmission unit as described above and a propulsion unit connected to the first transmission shaft of the transmission unit. The vehicle powertrain has the corresponding advantages as described above with regard to the transmission unit.

The vehicle powertrain may further comprise a planetary gearbox unit connected to the third transmission shaft of the transmission unit. Thereby, it is possible to obtain a four-speed transmission arrangement in the vehicle powertrain.

The transmission unit may have a central longitudinal axis transversal to the rotational axis of the first transmission shaft and a central transversal plane parallel with the rotational axis of the first transmission shaft. The propulsion unit and the planetary gearbox unit may be arranged on the same side of the central longitudinal plane of the transmission unit, and on opposite sides of the central transversal plane of the transmission unit. Thereby, the available space in a vehicle may be efficiently utilized irrespective of whether the vehicle powertrain has a central drive configuration or an electric axle configuration.

The vehicle powertrain may further comprise a wheel axle connected to a driving wheel of the vehicle powertrain, and propulsion unit may be arranged between the transmission unit and said wheel axle as seen in a longitudinal direction of the vehicle powertrain. Thereby, the vehicle powertrain may have a central drive configuration. This also for example allows including a second propulsion unit in the form of a second electrical machine either connected in series with the first propulsion unit or arranged on the opposite side of the transmission unit as seen in the longitudinal direction of the vehicle powertrain.

The vehicle powertrain may further comprise a wheel axle, connected to a driving wheel of the vehicle powertrain, and a final gear set connecting an output shaft of the planetary gearbox unit with the wheel axle via a differential of the vehicle powertrain. Thereby, the vehicle powertrain may have an electric axle configuration, and comprise a four-speed transmission arrangement.

In case the vehicle powertrain does not comprise the planetary gearbox unit, the vehicle powertrain may comprise a final gear set connecting the third transmission shaft of the transmission unit with the wheel axle via a differential of the vehicle powertrain. Thereby, the vehicle powertrain may have an electric axle configuration with a two-speed transmission.

The present invention also relates to a vehicle comprising the vehicle powertrain described above.

### BRIEF DESCRIPTION OF DRAWINGS

- Fig. 1: schematically illustrates a side view of a vehicle according to one example,
- Fig. 2: schematically illustrates a first exemplifying embodiment of a transmission unit in accordance with the present invention,
- Fig. 3: schematically illustrates a second exemplifying embodiment of a transmission unit in accordance with the present invention,
- Fig. 4: schematically illustrates a third exemplifying embodiment of a transmission unit in accordance with the present invention when arranged in a vehicle powertrain,
- Fig. 5: schematically illustrates one exemplifying embodiment of a transmission arrangement in accordance with the present invention,
- Fig. 6: schematically illustrates a vehicle powertrain comprising a transmission arrangement, such as the transmission arrangement of Figure 5, and
- Fig. 7: schematically illustrates a vehicle powertrain comprising the transmission unit as shown in Figure 2.

### DETAILED DESCRIPTION

The invention will be described in more detail below with reference to exemplifying embodiments and the accompanying drawings. The invention is however not limited to the exemplifying embodiments discussed and/or shown in the drawings, but may be varied within the scope of the appended claims. Furthermore, the drawings shall not be considered drawn to scale as some features may be exaggerated in order to more clearly illustrate the invention or features thereof.

In accordance with the present invention, a transmission unit intended for usage in a vehicle powertrain is provided. The transmission unit comprises a first transmission shaft forming the input shaft of the transmission unit. In other words, the first transmission shaft is configured to be connected to at least one propulsion unit of a vehicle powertrain, such as an electrical machine, when the transmission unit is arranged in the vehicle powertrain. The first transmission shaft comprises a first gear wheel. The first gear wheel may be fixedly connected to the first transmission shaft so as to rotate therewith. The transmission unit further comprises a second transmission shaft comprising a second gear wheel. The second gear wheel may be fixedly connected to the second transmission shaft so as to rotate therewith. The second gear wheel of the second transmission shaft is arranged so as to cooperate with the first gear wheel of the first transmission shaft. In other words, the second gear wheel is connected to the first gear wheel by the cogs of the respective gear wheels intermeshing. A rotation of the first gear wheel thus causes a rotation of the second gear wheel. The second transmission shaft of the transmission unit further comprises a third gear wheel. The third gear wheel may be fixedly connected to the second transmission shaft so as to rotate therewith.

The transmission unit further comprises a third transmission shaft. The third transmission shaft comprises a fourth gear wheel. The fourth gear wheel is arranged to cooperate with the third gear wheel of the second transmission shaft. In other words, the fourth gear wheel is connected to the third gear wheel by the cogs of the respective gear wheels intermeshing. The fourth gear wheel may be arranged to rotate freely in relation to the third transmission shaft, but may be selectively coupled to the third transmission shaft for rotation therewith. According to an alternative, the fourth gear wheel may be fixedly arranged on the third transmission shaft so as to rotate therewith. In such a case, the second transmission shaft may be a divided shaft comprising two shaft portions which may be selectively coupled to each other (i.e. selectively rotationally locked to each other).

The third transmission shaft further comprises a fifth gear wheel. The fifth gear wheel is arranged to cooperate with the second gear wheel of the second transmission shaft. In other words, the fifth gear wheel is connected to the second gear wheel by the cogs of the respective gear wheels intermeshing. The fifth gear wheel is configured to be selectively coupled to the third transmission shaft for rotation therewith. In other words, the fifth gear wheel is arranged so as to be able to rotate freely in relation to the third transmission, but may be coupled to the third transmission shaft for rotation therewith. More specifically, when the fifth gear wheel is coupled to the third transmission shaft, the fifth gear wheel is locked for rotation with the third transmission shaft. For said purpose, the transmission unit may comprise a coupling device configured to selectively couple the fifth gear wheel to the third transmission shaft. The coupling device may further be configured to selectively couple the fourth gear wheel to the third transmission shaft, in case the fourth gear wheel is not fixedly arranged on the third transmission shaft.

The above described transmission unit comprises two gear rows that are capable of transferring driving torque through the transmission unit from an input shaft thereof to an output shaft thereof. A gear row is in the present disclosure considered to mean at least two gear wheels connected to each other such that a rotation of one of the gear wheels inherently results in a rotation of the other gear wheel(s) of the gear row irrespectively of whether the respective gear wheels are locked for rotation with a respective transmission shaft. Moreover, the wording gear row, as used herein, may as an alternative or in addition be defined as at least two gear wheels located in the same plane, and wherein the respective rotation axis of the at least two gear wheels is perpendicular to the plane. The first gear row of the transmission unit described herein is defined by the first gear wheel, the second gear wheel and the fifth gear wheel. The first gear row may be free from any additional gear wheels, and thus consist of the first, the second and the fifth gear wheels. The second gear row is defined by the third gear wheel and the fourth gear wheel. The second gear row may be free from any additional gear wheel. In other words, the second gear row may consist of the third gear wheel and the fourth gear wheel. The transmission unit may be free from additional gear rows, and the first and second gears rows therefore being the only gear rows of the transmission unit that are capable of transferring driving torque from an input shaft of the transmission unit to the output shaft of the transmission unit. Thereby, the transmission unit can have a compact design in a first direction parallel with the rotational axis of the first transmission shaft, but at the same time have sufficient extension (length) in a second direction perpendicular to the first direction, to make it suitable for use both in a vehicle powertrain having a central drive configuration and a vehicle powertrain having an electric axle configuration.

The above described transmission unit is a so called two-speed transmission unit. In cases wherein a two-speed transmission unit is not sufficient to meet end user requirements, the transmission unit may be supplemented with additional transmission units, thereby arriving at a transmission arrangement for a vehicle powertrain. More specifically, the transmission unit according to the present invention can be combined with a planetary gearbox unit. In such a case, a four-speed transmission arrangement may be achieved.

Thus, in accordance with the present invention, a transmission arrangement is also provided. The transmission arrangement comprises the transmission unit as described herein. The transmission arrangement further comprises a planetary gearbox unit. The planetary gearbox unit may be connected to the third transmission shaft of the transmission unit. An output shaft of the planetary gearbox unit may constitute the output shaft of the transmission arrangement. The output shaft of the transmission arrangement may in turn be connected to a propeller shaft when the transmission arrangement is arranged in a vehicle powertrain having a central drive configuration. In case of the transmission arrangement being arranged in a vehicle powertrain having an electric axle configuration, the output shaft of the transmission arrangement may instead be connected to a differential of a wheel axle by means of a final gear set.

The present invention further relates to a vehicle powertrain. The vehicle powertrain comprises the transmission unit as described above, or the transmission arrangement as described above. The vehicle powertrain may have a central drive configuration wherein the electrical machine may be mounted to a chassis of the vehicle. Alternatively, the vehicle powertrain may have an electric axle configuration wherein the electrical machine may be mounted to the wheel axle of the vehicle. The vehicle powertrain may be a vehicle powertrain of a heavy vehicle, such as a truck.

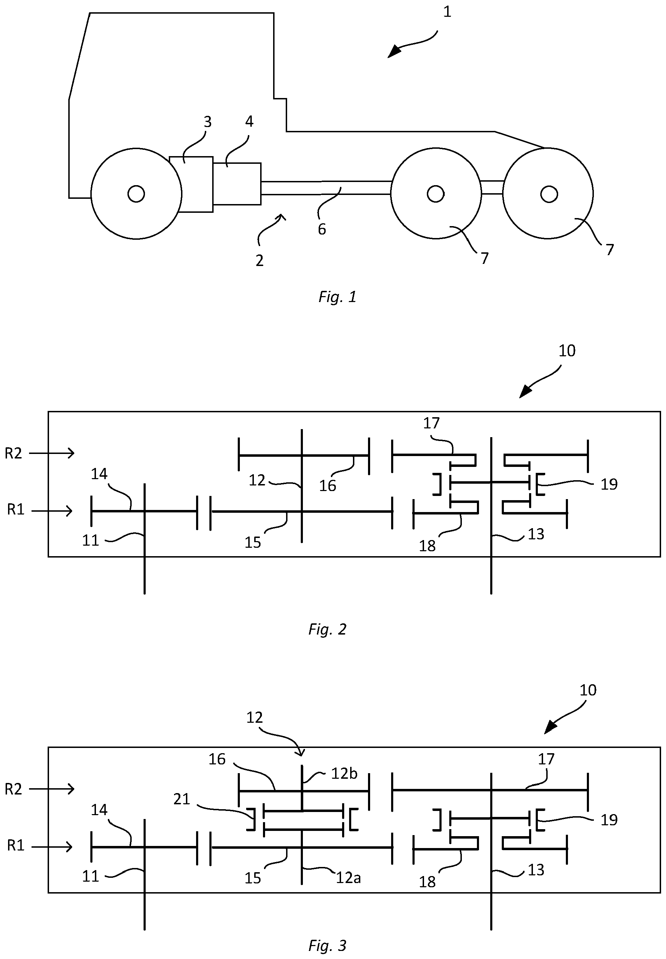

Figure 1 schematically illustrates a side view of an example of a vehicle 1. The vehicle 1 comprises a powertrain 2 having a central drive configuration. The vehicle powertrain 2 comprises a propulsion unit, such as an electrical machine 3, and a transmission 4 configured to selectively transfer driving torque to the driving wheels 7 of the vehicle powertrain 2. The transmission 4 may be connected to the driving wheels 7 via a propeller shaft 6, which is also a constituent component of the vehicle powertrain 2. The vehicle powertrain 2 may comprise further constituent components, such as a retarder (not shown). The vehicle powertrain 2 is configured to provide motive power to the vehicle 1 via the driving wheels 7. The driving wheels 7 may also be referred to as drive wheels 7.

Figure 2 schematically illustrates a transmission unit 10 according to a first exemplifying embodiment of the present invention. The transmission unit 10 comprises a first transmission shaft 11 configured to function as an input shaft, i.e. forming the input shaft of the transmission unit 10. A first gear wheel 14 is fixedly arranged on the first transmission shaft 11. In other words, the first gear wheel 14 is locked for rotation with the first transmission shaft 11. The first gear wheel 11 is cooperating with a second gear wheel 15, which means that the cogs of the first gear wheel 14 intermesh with the cogs of the second gear wheel 15. The first gear wheel 14 is therefore engaged with the second gear wheel 15.

The second gear wheel 15 is fixedly arranged on a second transmission shaft 12 of the transmission unit 10 so as to rotate therewith. This means that a rotation of the first transmission shaft 11 will cause a rotation of the second transmission shaft 12 by means of the cooperating first and second gear wheels 14, 15. The rotational speed of the second transmission shaft 12 will thus be proportional to the rotational speed of the first transmission shaft 11. The rotational speed of the second transmission shaft 12 will depend on a gear ratio as provided by the first and second gear wheels 14, 15.

The transmission unit 10 further comprises a third gear wheel 16 fixedly arranged on the second transmission shaft 12. The third gear wheel 16 is thus configured to rotate with the second transmission shaft 12. The third gear wheel 16 cooperates with a fourth gear wheel 17 of a third transmission shaft 13 of the transmission unit 10. The third gear wheel 16 is engaged with the fourth gear wheel by the respective cogs of the gear wheels intermeshing. The fourth gear wheel 17 may be arranged on the third transmission shaft 13 so that it may rotate freely in relation thereto, but may be selectively locked for rotation with the third transmission shaft 13. More specifically, the fourth gear wheel 17 may be selectively locked for rotation with the third transmission shaft 13 by means of a first coupling device 19 configured to selectively couple the fourth gear wheel 17 to the third transmission shaft 13. The coupling device 19 may be a conventional coupling sleeve that is axially displaceable between a first position wherein it couples (i.e. locks) the fourth gear wheel 17 to the third transmission shaft 13, and a second position wherein the coupling device 19 does not couple the fourth gear wheel 17 to the third transmission shaft 13. The coupling device 19 may comprise a dog clutch, a synchromesh or the like.

The third transmission shaft 14 further comprises a fifth gear wheel 18. The fifth gear wheel 17 is arranged on the third transmission shaft 13 so that it may rotate freely in relation thereto, but may be selectively locked for rotation with the third transmission shaft 13. More specifically, the fifth gear wheel 17 may be selectively locked for rotation with the third transmission shaft 13 by means of the coupling device 19 described above. Thus, in accordance with the first exemplifying embodiment, the coupling device 19 is configured to selectively couple either the fourth gear wheel 17 or the fifth gear wheel 18 to the third transmission shaft 13. It should however be noted that an alternative to utilizing a common coupling device for selectively coupling the fourth gear wheel and the fifth gear wheel to the third transmission shaft, as shown in Figure 2, it is also plausible to utilize two separate coupling devices for the same purpose, if desired. In such a case, one of the coupling devices is associated with the fourth gear wheel 17 and the second coupling device is associated with the fifth gear wheel 18.

The fifth gear wheel 18 is arranged to cooperate with the second gear wheel 15 of the second transmission shaft 12. In other words, the second gear wheel 15 engage with the fifth gear wheel 18 by the respective cogs of the gear wheels intermeshing. A rotation of the second gear wheel 15 will thus cause a rotation of the fifth gear wheel 18.

The third transmission shaft 13 is configured to function as an output shaft of the transmission unit 10. In other words, the third transmission shaft 13 constitutes the output shaft of the transmission unit 10. The third transmission shaft 13 can thus be connected to other constituent components of a vehicle powertrain, such as a further transmission unit, a propeller shaft or a wheel axle via a gear wheel pair connected to a differential of the wheel axle, as desired.

The first gear wheel 14, the second gear wheel 15 and the fifth gear wheel 17 jointly form a first gear row R1. In other words, the first gear row R1 consists of the first gear wheel 14, the second gear wheel 15 and the fifth gear wheel 17. Moreover, the third gear wheel 16 and the fourth gear wheel 17 jointly form a second gear row R2. In other words, the second gear row R2 consists of the third gear wheel 16 and the fourth gear wheel 17. A rotation of one gear wheel within a row of gear wheels will inherently result in a rotation of the other gear wheel(s) of the same gear row.

The first gear row R1 and the second gear row R2 may be the only gear rows configured to transfer driving torque through the transmission unit 10 from a propulsion unit to driving wheels when the transmission unit is arranged in a vehicle powertrain. In other words, the transmission unit need not comprise any further gear rows. Thereby, the transmission unit 10 can have a relatively compact transversal extension, wherein the transversal extension in this context is considered to be in a direction parallel with the rotational axis of the first transmission shaft 11. At the same time, the fact that the transmission unit comprises three parallel transmission shafts 11, 12, 13, the transmission unit 10 may have a sufficient longitudinal extension for enabling an arrangement of a propulsion unit (more specifically an electrical machine) on the same side of transmission unit as connected to the wheel axle. This is particularly advantageous in case of utilizing the transmission unit in a vehicle powertrain having an electric axle configuration where the available space for accommodating the transmission unit and the propulsion unit may be limited. The longitudinal extension of the transmission unit is in this context considered to be the direction perpendicular to the rotational axis of the first transmission shaft.

In the transmission unit illustrated in Figure 2, the first gear row R1 is arranged in the transmission unit 10 such that the first gear row R1 will be interposed between the second gear row R2 and a propulsion unit connected to the first transmission shaft 11 when the transmission unit 10 is arranged in a vehicle powertrain. The transmission unit is however not limited thereto. Instead, the second gear row may R2 be arranged in the transmission unit 10 such that the second gear row R2 will be interposed between the first gear row R1 and a propulsion unit connected to the first transmission shaft 11 when the transmission unit is arranged in a vehicle powertrain.

As seen in Figure 2, the first transmission shaft 11 and the third transmission shaft 13 may extend from the transmission unit 10 in the same direction. It should however be noted, that it is also possible for the first transmission shaft 11 and the third transmission shaft 13 to extend from the transmission unit in opposite directions. In such a case, the input shaft of the transmission unit extend out of the transmission unit in a first direction and the output shaft of the transmission unit 10 extend out of the transmission unit in the opposite direction, and the input shaft and the output shaft of the transmission unit are parallel. Moreover, the first transmission shaft 11 may, if desired, extend in both directions from the transmission unit 10 to thereby allow connection to two propulsion units, each arranged on opposites sides of the transmission unit 10, if desired.

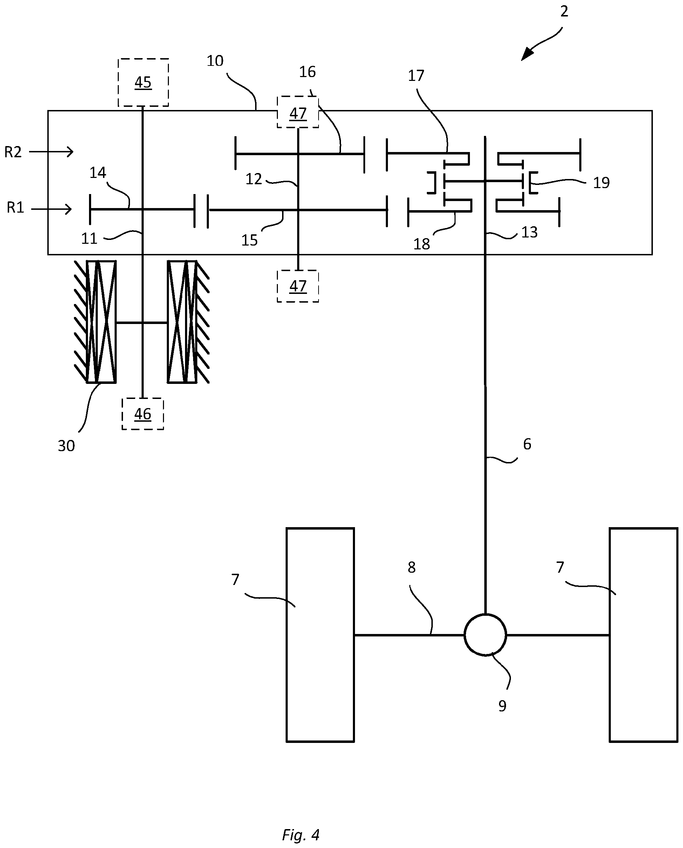

The transmission unit 10 according to the first exemplifying embodiment can further be adapted to specific requirements of an end user, such as the ability for power takes-offs from the transmission unit 10 or connection of a retarder to the transmission unit. An alternative for such power take-offs and/or retarder will be described below with reference to Figure 4. It is however also possible for example to include a separate additional shaft connected to one of the transmission shafts 11, 12 or 13 by means of a gear wheel pair, such additional shaft serving the purpose of enabling a power take-off connection. The additional power take-off shaft and the gear wheels connecting the power take-off shaft to one of the transmission shafts is thus not configured to transfer driving torque from a propulsion unit to driving wheels when the transmission unit in arranged in a vehicle powertrain.

Figure 3 schematically illustrates a transmission unit 10 according to a second exemplifying embodiment of the present invention.

The second exemplifying embodiment is similar to the first exemplifying embodiment. However, in accordance with the second exemplifying embodiment, the second transmission shaft 12 is a divided shaft. In other words, the second transmission shaft comprises a first longitudinal shaft portion 12a and a second longitudinal shaft portion 12b. The first longitudinal shaft portion 12a and the second longitudinal shaft portion 12b may selectively be coupled to each other by means of a second coupling device 21. When the first and second longitudinal shaft portions 12a, 12b are coupled to each other, they are locked for rotation with each other. According to this second exemplifying embodiment, the second gear wheel 15 is arranged on the first longitudinal shaft portion 12a of the second transmission shaft 12, and the third gear wheel 16 is arranged on the second longitudinal shaft portion 12b of the second transmission shaft 12. Moreover, in contrast to the first exemplifying embodiment as shown in Figure 2, the fourth gear wheel 17 is fixedly coupled to the third transmission shaft 13. Thus, in accordance with the second exemplifying embodiment, the fourth gear wheel 17 is configured to rotate with the third transmission shaft at all times. In the same way as according to the first exemplifying embodiment, the fifth gear wheel 18 is arranged on the third shaft 13 so that it may rotate freely in relation to the third transmission shaft 13, but may be selectively coupled to the third transmission shaft 13 by means of the first coupling device 19. In other words, the fifth gear wheel 18 is configured to be selectively locked for rotation with the third transmission shaft 13.

Figure 4 schematically illustrates a third exemplifying embodiment of a transmission unit 10, when the transmission unit 10 is arranged in a vehicle powertrain 2. The vehicle powertrain 2 shown has a central drive configuration. The vehicle powertrain 2 comprises a propulsion unit in the form of an electrical machine 30. The electrical machine 30 is connected to the input shaft of the transmission unit 10, i.e. the first transmission shaft 11. The third transmission shaft 13 of the transmission unit forms an output shaft of the transmission unit 10 and is connected to a propeller shaft 6 of the vehicle powertrain 2. The connection of the third transmission shaft 13 to the propeller shaft 6 can be made in accordance with any previously means therefore and will therefore not be described in further detail herein. The propeller shaft 6 is in turn connected to a wheel axle 8 of the vehicle powertrain 2 via a conventional final gear and differential 9, which are also constituent components of the vehicle powertrain 2. The transmission unit 10 is thus configured to transmit driving torque at different gear ratios from the electrical machine 30 to the driving wheels 7 of the vehicle powertrain.

The transmission unit 10 according to the third exemplifying embodiment is essentially the same as the transmission unit according to the first exemplifying embodiment, but the first transmission shaft 11 extend from the transmission unit 10 in two directions. Furthermore, the second transmission shaft 12 extend out from the transmission unit 10 in at least one direction. By allowing the first transmission shaft 11 to extend from the transmission unit 10 also in a direction opposite where the electrical machine is arranged, it is possible to connect for example a retarder 45 to the first transmission shaft 11. Alternatively, a power take-off or other auxiliary may be arranged at the position illustrated by the retarder 45. It is also possible to connect a power take-off 46 or retarder 46 or other auxiliary 46 to the first transmission shaft 11 at the opposite side of the electrical machine. A further power take-off 47 may additionally or alternatively be connected to the second transmission shaft 12 as shown in the figure. Albeit illustrated to be on the same side of the transmission unit 10 as the electrical machine 30, the power take-off 47 may instead be arranged on the opposite side of the transmission unit 10 as compared to the electrical machine 30 seen in a longitudinal direction of the vehicle. It may also be possible to connect a retarder or other auxiliary to the second transmission shaft, if desired. An auxiliary may for example be a water pump, a steering servo pump, oil pump, compressor or the like.

As shown in Figure 4, the electrical machine 30 is arranged on the same side of the transmission unit 10 as facing the wheel axle 8. In other words, the electrical machine 30 is arranged between the transmission unit 10 and the wheel axle 8 as seen in the longitudinal direction of the vehicle powertrain. A longitudinal direction of the vehicle powertrain is in this context considered to correspond to the longitudinal direction of a vehicle comprising said vehicle powertrain, which may also be described as essentially corresponding to a direction substantially parallel to (or coinciding with) the axis of the propeller shaft 6. Described differently, the electrical machine 30 is arranged on the same side of a central longitudinal plane of the transmission unit 10 as the wheel axle of the vehicle powertrain 2. A central longitudinal plane of the transmission unit 10 is in the present disclosure considered to mean a plane transversal to the rotational axis of the first transmission shaft 11, said plane positioned at a center of the transmission unit 10 measured in directions perpendicular to the rotational axis of the first transmission shaft 11. It should however be noted that the electrical machine 30 may alternatively be arranged on the opposite side of the transmission unit 10 to the side on which the electrical machine is illustrated in Figure 4 to be arranged, if desired. In such a case, the electrical machine 30 would be arranged on an opposite side of the central longitudinal plane of the transmission unit as the wheel axle 8 of the vehicle powertrain 2. If so, the input shaft of the transmission unit extends from the transmission unit in the opposite direction to the extension of the output shaft out from the transmission unit 10, as seen in relation to the central longitudinal plane of the transmission unit. This also means that in the vehicle powertrain, the transmission unit 10 would be arranged between the electrical machine 30 and the wheel axle 8 as seen in the longitudinal direction of the vehicle powertrain. It is also possible that the first transmission shaft 11 extends in both directions of the transmission unit so as to arrange one electrical machine 30 on the first side and an additional electrical machine on the other side of the transmission unit 10 as seen in a longitudinal direction of the vehicle (compare with the illustrated position of the possible retarder 45), if desired.

The transmission unit 10 may be arranged in the vehicle powertrain 2 having a central drive configuration in an orientation such that the rotational axis of the first transmission shaft 11 is essentially parallel to the longitudinal direction of the vehicle powertrain 2.

As mentioned above, the transmission unit 10 according to the third exemplifying embodiment is similar to the transmission unit according to the first exemplifying embodiment illustrated in Figure 2. It should however be noted that it may be modified as described with reference to the second exemplifying embodiment, wherein the second transmission shaft 12 is a divided shaft comprising two shaft portions 12a, 12b and wherein the fourth gear wheel 17 is fixedly arranged on the third transmission shaft 13.

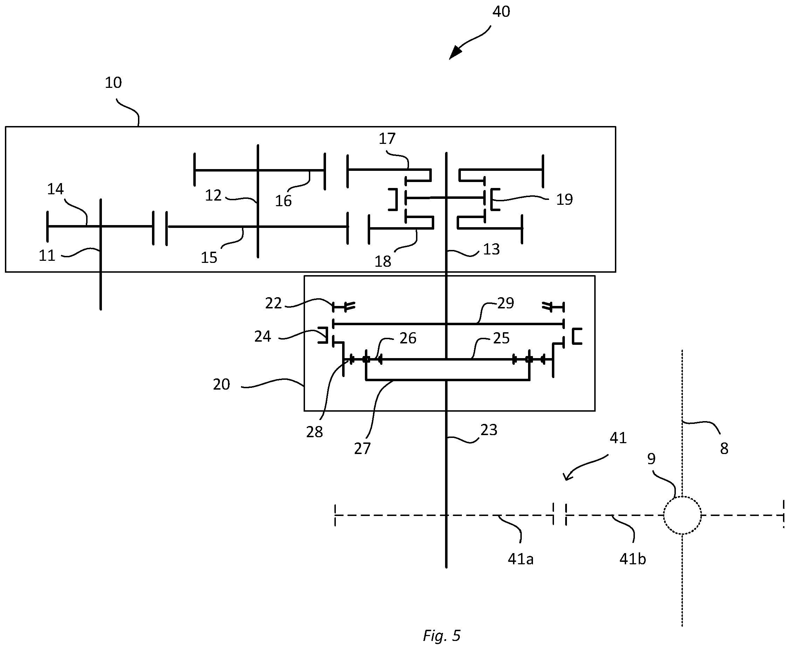

Figure 5 schematically illustrates one exemplifying embodiment of transmission arrangement 40 in accordance with the present invention. The transmission arrangement 40 comprises the transmission unit 10 as described above with reference to Figure 2. Alternatively, the transmission arrangement 40 may comprise the transmission unit as described above with reference to Figure 3. The transmission arrangement 40 further comprises a planetary gearbox unit 20. The planetary gearbox unit 20 is connected to the third transmission shaft 13 of the transmission unit 10. The transmission arrangement 40 is a so called four-speed transition arrangement.

The planetary gearbox unit 20 comprises a sun wheel 25, planet gears 26 supported by a carrier 27, and a ring gear 28. The third transmission shaft 13 of the transmission unit 10 may according to one example be connected to the sun wheel 25. The carrier 27 may in such a case be connected to the output shaft 23 of the planetary gearbox unit 20. The output shaft 23 also serves as the output shaft of the transmission arrangement 40 as such. The planetary gearbox unit may further comprise a locking device 24 and a locking gear wheel 29 configured to allow selectively locking the constituent components of the planetary gearbox unit. When the ring gear 28 is connected to locking gear wheel 29 by means of the locking device 24, the ring gear 28 and the sun wheel 25 will rotate together. When the ring gear 28 is connected to ground 22 (which may be a housing connection) by means of the locking device 24, the ring gear 28 will be at standstill (i.e. not rotate).

The planetary gearbox unit 20 may have other configurations than the one exemplified in Figure 5. For example, the third transmission shaft 13 of the transmission unit 10 may instead be connected to a planet carrier of the planetary gearbox unit and the output shaft 23 of the planetary gearbox unit be connected to the sun wheel 26.

In case the transmission arrangement 40 is to be arranged in a vehicle powertrain having an electric axle configuration, the transmission arrangement 40 may further comprise a final gear set 41. The final gear set comprises a gear wheel 41a connected to the output shaft 23 of the transmission unit 40, and a gear wheel 41b which may be connected to a differential 9 of a wheel axle 8. The differential 9 and the wheel axle 8 are here illustrated by dotted lines in view of not being a part of the transmission arrangement per se.

In Figure 5 the output shaft 23 of the planetary gearbox unit 20 is extending out from the planetary gear box unit 20 on a side opposite to the side where the third transmission shaft 13 of the transmission unit 10 is connected to the planetary gearbox unit 20. However, although not illustrated in Figure 5, the output shaft 23 may alternatively extend out from the planetary gearbox unit 20 on the same side as the third transmission shaft 13 is connected to the planetary gearbox unit 20. Thereby the output shaft 23 is directed towards the transmission unit 10. This enables the final gear set 41 to be arranged between the transmission unit 10 and the planetary gearbox unit 20. In such an arrangement the output shaft 23 may typically be arranged coaxially on the outside of the third transmission shaft 13. Further, the locking gear wheel 29 and ground 22 may be arranged on a side of the planetary gear box 20 opposite to the side where the output shaft 23 and the third transmission shaft 3 are coaxially arranged.

In case the transmission arrangement 40 is to be arranged in a vehicle powertrain having a central drive configuration, there is no need for the final gear set 41 and the output shaft 23 of the planetary gearbox unit 20 is instead connected to the propeller shaft of the vehicle powertrain.

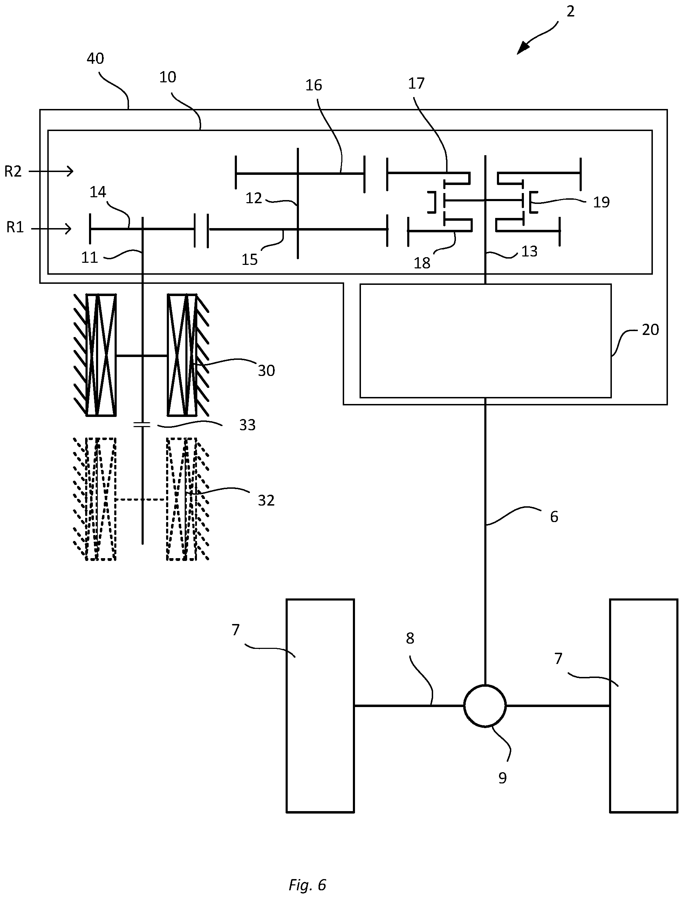

Figure 6 schematically illustrates a vehicle powertrain 2 comprising a transmission arrangement 40 according to the present invention, such as the transmission arrangement shown in Figure 5. The transmission arrangement 40 comprises a transmission unit 10 as well as a planetary gearbox unit 20. The vehicle powertrain 2 comprises a first electrical machine 30 connected to the first transmission shaft 11 of the transmission unit 10 of the transmission arrangement 40. The electrical machine 30 and the planetary gearbox unit 20 may be arranged on the same side of a central longitudinal plane of the transmission unit 10, and on opposite sides of a central transversal plane of the transmission unit. As mentioned above, the central longitudinal plane of the transmission unit 10 is in the present disclosure considered to mean a plane transversal to the rotational axis of the first transmission shaft 11, said plane positioned at a center of the transmission unit 10 measured in directions perpendicular to the rotational axis of the first transmission shaft 11. The central transversal plane of the transmission unit 10 is in the present disclosure considered to mean a plane parallel with the rotational axis of the first transmission shaft 11, said plane positioned at a center of the transmission unit measured in directions parallel with the rotational axis of the first transmission shaft 11.

The vehicle powertrain 2 may optionally further comprise a second electrical machine 32 and means 33 for connecting and disconnecting the second electrical machine 32, if desired. Including a second electrical machine 32 may significantly increase the performance of the vehicle powertrain. The second electrical machine 32 may be connected to the first transmission shaft 11 of the transmission unit 10. The second electrical machine 32 may be arranged in series with the first electrical machine 30. As shown in figure 6, the electrical machine 30 as well as the optional second electrical machine 32 may be arranged on the same side of the transmission unit 10 as the planetary gearbox unit 20. More specifically, in view of the configuration of the transmission unit 10 as given by the three transmission shafts 11, 12, 13 and the two gear rows R1 and R1, there will be room available in a vehicle to include a second electrical machine 32 connected to the first transmission shaft 11.

The vehicle powertrain shown in Figure 6 has a central drive configuration, and thus comprises a propeller shaft 6 connected with the wheel axle 8 via a differential 9. An output shaft of the planetary gearbox unit 20 also acts as the output shaft of the transmission arrangement 40 as such, and may thus be connected to the propeller shaft 6 of the vehicle powertrain.

Albeit not shown in the figure, the transmission unit 10 of the transmission arrangement 40 may comprise one or more connections to power take-offs such as described above with reference to Figure 4. The vehicle powertrain 2 may further comprise a retarder, which may for example be connected to the first transmission shaft 11 of the transmission unit 10.

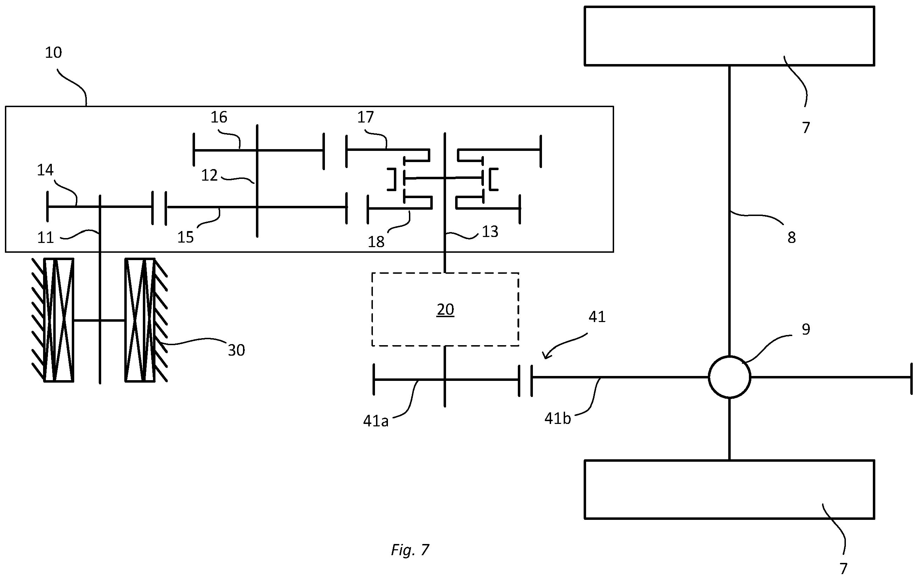

Figure 7 schematically illustrates a vehicle powertrain 2 having an electric axle configuration. The vehicle powertrain 2 comprises a transmission unit 10 as described above with reference to Figure 2. Alternatively, the vehicle powertrain 2 may comprise a transmission unit as described above with reference to Figure 3. The vehicle powertrain 2 further comprises an electrical machine 30 connected to the first transmission shaft 11 of the transmission unit 10. Albeit not shown in the figure, the vehicle powertrain 2 can further comprise a second electrical machine connected to the first transmission shaft 11, such as the second electrical machine 32 shown in Figure 6.

The vehicle powertrain 2 may optionally comprise a planetary gearbox unit 20. If so, the planetary gearbox unit 20 is connected to the third transmission shaft 13 of the transmission unit 10.

The vehicle powertrain further comprises a final gear set 41 configured to provide a connection to the wheel axle 8 via a differential 9. In case there is no planetary gearbox unit 20 in the vehicle powertrain 2, one gear wheel 41a of the final gear set 41 is arranged on the third transmission shaft 13 of the transmission unit and is cooperating with the other gear wheel 41b of the final gear set 41. The gear wheel 41b is rotatably connected to the differential. In case the vehicle powertrain 2 comprises a planetary gearbox unit, the final gear set is connected to the output shaft of the planetary gearbox unit 20 as described above with reference to figure 5. However not shown by figure 5, the final gear set 41 may be arranged between the transmission unit 10 and the planetary gearbox unit 20, as described earlier above.

As shown in Figure 7, the transmission unit 10 may be arranged in a vehicle powertrain 2 having an electric axle configuration such that the first transmission shaft 11 is essentially parallel to the wheel axle 8. This is in contrast to the case where the transmission unit 10 is arranged in a vehicle powertrain having a central drive configuration, in which transmission unit 10 may be arranged such that the first transmission shaft 11 will be essentially perpendicular to the wheel axle 8.

## Claims

1. A transmission unit (10) for a vehicle powertrain (2),
the transmission unit (10) comprising:
a first transmission shaft (11) configured to function as an input shaft of the transmission unit (10), the first transmission shaft (11) comprising a first gear wheel (14);
a second transmission shaft (12) comprising a second gear wheel (15) and a third gear wheel (16), the second gear wheel (15) being arranged to cooperate with the first gear wheel (14) of the first transmission shaft (11);
a third transmission shaft (13) comprising a fourth gear wheel (17), the fourth gear wheel (17) being arranged to cooperate with the third gear wheel (16) of the second transmission shaft (12);
the third transmission shaft (13) further comprising a fifth gear wheel (18) arranged to be selectively connectable to the third transmission shaft (13) for rotation with the third transmission shaft (13), the fifth gear wheel (18) being arranged to cooperate with the second gear wheel (15) of the second transmission shaft (12), wherein the transmission unit (10) comprises only two gear rows (R1, R2) that are capable of transferring driving torque from a propulsion unit (30, 32) to driving wheels (7) of the vehicle powertrain (2) when the transmission unit (10) is arranged in the vehicle powertrain (2),
wherein the first gear row (R1) of the two gear rows (R1, R2) is defined by the first gear wheel (14), the second gear wheel (15) and the fifth gear wheel (18), and
the second gear row (R2) of the two gear rows (R1, R2) is defined by the third gear wheel (16) and the fourth gear wheel (17).

2. The transmission unit (10) according to claim 1, further comprising a coupling device (19) configured to selectively couple the fifth gear wheel (18) to the third transmission shaft (13).

3. The transmission unit (10) according to claim 2, wherein the coupling device (19) further is configured to selectively couple the fourth gear wheel (17) to the third transmission shaft (13).

4. The transmission unit (10) according to any one of the preceding claims, wherein the third transmission shaft (13) is configured to function as an output shaft of the transmission unit (10), and wherein the first transmission shaft (11) and the third transmission shaft (13) are arranged such that the input shaft and the output shaft of the transmission unit (10) extend out of the transmission unit (10) in the same direction.

5. A transmission arrangement (40) for a vehicle powertrain (2),
the transmission arrangement (40) comprising:
the transmission unit (10) according to any one of the preceding claims; and
a planetary gearbox unit (20) connected to the third transmission shaft (13) of the transmission unit (10).

6. The transmission arrangement (40) according to claim 5, further comprising a final gear set (41) configured to connect the transmission arrangement (40) to a wheel axle (8) of a vehicle powertrain (2) via a differential (9), the final gear set (41) being arranged at an output shaft (23) of the planetary gearbox unit (20).

7. A vehicle powertrain (2) comprising:
the transmission unit (10) according to any one of claims 1 to 5; and
a propulsion unit (30, 32) connected to the first transmission shaft (11) of the transmission unit (10).

8. The vehicle powertrain (2) according to claim 7, further comprising a planetary gearbox unit (20) connected to the third transmission shaft (13) of the transmission unit (10).

9. The vehicle powertrain (2) according to claim 8, wherein the transmission unit (10) has a central longitudinal plane transversal to the rotational axis of the first transmission shaft (11) and a central transversal plane parallel with the rotational axis of the first transmission shaft (11), and wherein the propulsion unit (30, 32) and the planetary gearbox unit (20) are arranged on the same side of the central longitudinal plane of the transmission unit (10) and opposite sides of the central transversal plane of the transmission unit (10).

10. The vehicle powertrain (2) according to any one of claims 7-9, further comprising a wheel axle (8) connected to a driving wheel (7) of the vehicle powertrain (2), and wherein the propulsion unit (30, 32) is arranged between the transmission unit (10) and the wheel axle (8) as seen in a longitudinal direction of the vehicle powertrain (2).

11. The vehicle powertrain (2) according to any one of claims 7-9, further comprising a wheel axle (8) connected to a driving wheel (7) of the vehicle powertrain (2), and a final gear set (41) connecting an output shaft (23) of the planetary gearbox unit (20) with the wheel axle (8) via a differential (9) of the vehicle powertrain (2).

12. The vehicle powertrain (2) according to claim 7, further comprising a wheel axle (8) connected to a driving wheel (7) of the vehicle powertrain (2), and a final gear set (41) connecting the third transmission shaft (13) of the transmission unit (10) with the wheel axle (8) via a differential (9) of the vehicle powertrain (2).

13. A vehicle (1) comprising the vehicle powertrain (2) according to any one of claims 7-12.

## Patentansprüche

1. Getriebeeinheit (10) für einen Fahrzeugantriebsstrang (2),
wobei die Getriebeeinheit (10) Folgendes umfasst:
einer erste Getriebewelle (11), die dazu ausgestaltet ist, als eine Eingangswelle der Getriebeeinheit (10) zu fungieren, wobei die erste Getriebewelle (11) ein erstes Getrieberad (14) umfasst;
eine zweite Getriebewelle (12), die ein zweites Getrieberad (15) und ein drittes Getrieberad (16) umfasst, wobei das zweite Getrieberad (15) dazu angeordnet ist, mit dem ersten Getrieberad (14) der ersten Getriebewelle (11) zusammenzuwirken;
eine dritte Getriebewelle (13), die ein viertes Getrieberad (17) umfasst, wobei das vierte Getrieberad (17) dazu angeordnet ist, mit dem dritten Getrieberad (16) der zweiten Getriebewelle (12) zusammenzuwirken;
wobei die dritte Getriebewelle (13) ferner ein fünftes Getrieberad (18) umfasst, das dazu angeordnet ist, selektiv - zwecks Drehung mit der dritten Getriebewelle (13) - mit der dritten Getriebewelle (13) verbindbar zu sein, wobei das fünfte Getrieberad (18) dazu angeordnet ist, mit dem zweiten Getrieberad (15) der zweiten Getriebewelle (12) zusammenzuwirken, wobei die Getriebeeinheit (10) nur zwei Getriebestränge (R1, R2) umfasst, die in der Lage sind, ein Antriebsmoment von einer Antriebseinheit (30, 32) auf Antriebsräder (7) des Fahrzeugantriebsstrangs (2) zu übertragen, wenn die Getriebeeinheit (10) in dem Fahrzeugantriebsstrang (2) angeordnet ist,
wobei der erste Getriebestrang (R1) der zwei Getriebestränge (R1, R2) durch das erste Getrieberad (14), das zweite Getrieberad (15) und das fünfte Getrieberad (18) definiert ist und
der zweite Getriebestrang (R2) der zwei Getriebestränge (R1, R2) durch das dritte Getrieberad (16) und das vierte Getrieberad (17) definiert ist.

2. Getriebeeinheit (10) nach Anspruch 1, die ferner eine Kopplungsvorrichtung (19) umfasst, die dazu ausgestaltet ist, selektiv das fünfte Getrieberad (18) mit der dritten Getriebewelle (13) zu koppeln.

3. Getriebeeinheit (10) nach Anspruch 2, wobei die Kopplungsvorrichtung (19) ferner dazu ausgestaltet ist, selektiv das vierte Getrieberad (17) mit der dritten Getriebewelle (13) zu koppeln.

4. Getriebeeinheit (10) nach einem der vorangehenden Ansprüche, wobei die dritte Getriebewelle (13) dazu ausgestaltet ist, als eine Abtriebswelle der Getriebeeinheit (10) zu fungieren, und wobei die erste Getriebewelle (11) und die dritte Getriebewelle (13) derart angeordnet sind, dass sich die Eingangswelle und die Abtriebswelle der Getriebeeinheit (10) in derselben Richtung aus der Getriebeeinheit (10) heraus erstrecken.

5. Getriebeanordnung (40) für einen Fahrzeugantriebsstrang (2),
wobei die Getriebeanordnung (40) Folgendes umfasst:
die Getriebeeinheit (10) nach einem der vorangehenden Ansprüche; und
eine Planetengetriebeeinheit (20), die mit der dritten Getriebewelle (13) der Getriebeeinheit (10) verbunden ist.

6. Getriebeanordnung (40) nach Anspruch 5, die ferner einen abschließenden Getriebesatz (41) umfasst, der dazu ausgestaltet ist, die Getriebeanordnung (40) über ein Differential (9) mit einer Radachse (8) eines Fahrzeugantriebsstrangs (2) zu verbinden, wobei der abschließende Getriebesatz (41) an einer Abtriebswelle (23) der Planetengetriebeeinheit (20) angeordnet ist.

7. Fahrzeugantriebsstrang (2), umfassend:
die Getriebeeinheit (10) nach einem der Ansprüche 1 bis 5; und
eine Antriebseinheit (30, 32), die mit der ersten Getriebewelle (11) der Getriebeeinheit (10) verbunden ist.

8. Fahrzeugantriebsstrang (2) nach Anspruch 7, die ferner eine Planetengetriebeeinheit (20) umfasst, die mit der dritten Getriebewelle (13) der Getriebeeinheit (10) verbunden ist.

9. Fahrzeugantriebsstrang (2) nach Anspruch 8, wobei die Getriebeeinheit (10) eine zentrale Längsebene, die quer zur Drehachse der ersten Getriebewelle (11) ist, und eine zentrale Querebene, die parallel zur Drehachse der ersten Getriebewelle (11) ist, aufweist und wobei die Antriebseinheit (30, 32) und die Planetengetriebeeinheit (20) auf derselben Seite der zentralen Längsebene der Getriebeeinheit (10) und gegenüberliegenden Seiten der zentralen Querebene der Getriebeeinheit (10) angeordnet sind.

10. Fahrzeugantriebsstrang (2) nach einem der Ansprüche 7-9, der ferner eine Radachse (8) umfasst, die mit einem Antriebsrad (7) des Fahrzeugantriebsstrangs (2) verbunden ist, und wobei die Antriebseinheit (30, 32) - in einer Längsrichtung des Fahrzeugantriebsstrangs (2) gesehen - zwischen der Getriebeeinheit (10) und der Radachse (8) angeordnet ist.

11. Fahrzeugantriebsstrang (2) nach einem der Ansprüche 7-9, der ferner eine Radachse (8), die mit einem Antriebsrad (7) des Fahrzeugantriebsstrangs (2) verbunden ist, und einen abschließenden Getriebesatz (41), der eine Abtriebswelle (23) der Planetengetriebeeinheit (20) über ein Differential (9) des Fahrzeugantriebsstrangs (2) mit der Radachse (8) verbindet, umfasst.

12. Fahrzeugantriebsstrang (2) nach Anspruch 7, der ferner eine Radachse (8), die mit einem Antriebsrad (7) des Fahrzeugantriebsstrangs (2) verbunden ist, und einen abschließenden Getriebesatz (41), der die dritte Getriebewelle (13) der Getriebeeinheit (10) über ein Differential (9) des Fahrzeugantriebsstrangs (2) mit der Radachse (8) verbindet, umfasst.

13. Fahrzeug (1), das den Fahrzeugantriebsstrang (2) nach einem der Ansprüche 7-12 umfasst.

## Revendications

1. Unité de transmission (10) pour un groupe motopropulseur de véhicule (2), l'unité de transmission (10) comprenant :
un premier arbre de transmission (11) configuré pour fonctionner comme un arbre d'entrée de l'unité de transmission (10), le premier arbre de transmission (11) comprenant une première roue d'engrenage (14) ;
un deuxième arbre de transmission (12) comprenant une deuxième roue d'engrenage (15) et une troisième roue d'engrenage (16), la deuxième roue d'engrenage (15) étant agencée pour coopérer avec la première roue d'engrenage (14) du premier arbre de transmission (11) ;
un troisième arbre de transmission (13) comprenant une quatrième roue d'engrenage (17), la quatrième roue d'engrenage (17) étant agencée pour coopérer avec la troisième roue d'engrenage (16) du deuxième arbre de transmission (12) ;
le troisième arbre de transmission (13) comprenant en outre une cinquième roue d'engrenage (18) agencée pour pouvoir être sélectivement raccordée au troisième arbre de transmission (13) pour une rotation avec le troisième arbre de transmission (13), la cinquième roue d'engrenage (18) étant agencée pour coopérer avec la deuxième roue d'engrenage (15) du deuxième arbre de transmission (12), dans laquelle l'unité de transmission (10) comprend seulement deux rangées d'engrenages (R1, R2) qui sont capables de transférer un couple d'entraînement à partir d'une unité de propulsion (30, 32) aux roues motrices (7) du groupe motopropulseur de véhicule (2) lorsque l'unité de transmission (10) est agencée dans le groupe motopropulseur de véhicule (2),
dans laquelle la première rangée d'engrenages (R1) des deux rangées d'engrenages (R1, R2) est définie par la première roue d'engrenage (14), la deuxième roue d'engrenage (15) et la cinquième roue d'engrenage (18), et
la deuxième rangée d'engrenages (R2) des deux rangées d'engrenages (R1, R2) est définie par la troisième roue d'engrenage (16) et la quatrième roue d'engrenage (17).

2. Unité de transmission (10) selon la revendication 1, comprenant en outre un dispositif de couplage (19) configuré pour coupler sélectivement la cinquième roue d'engrenage (18) au troisième arbre de transmission (13).

3. Unité de transmission (10) selon la revendication 2, dans laquelle le dispositif de couplage (19) est en outre configuré pour coupler sélectivement la quatrième roue d'engrenage (17) au troisième arbre de transmission (13).

4. Unité de transmission (10) selon l'une quelconque des revendications précédentes, dans laquelle le troisième arbre de transmission (13) est configuré pour fonctionner comme un arbre de sortie de l'unité de transmission (10), et dans laquelle le premier arbre de transmission (11) et le troisième arbre de transmission (13) sont agencés de telle sorte que l'arbre d'entrée et l'arbre de sortie de l'unité de transmission (10) s'étendent hors de l'unité de transmission (10) dans la même direction.

5. Agencement de transmission (40) pour un groupe motopropulseur de véhicule (2), l'agencement de transmission (40) comprenant :
l'unité de transmission (10) selon l'une quelconque des revendications précédentes ; et
une unité de boîte de vitesses à trains épicycloïdaux (20) raccordée au troisième arbre de transmission (13) de l'unité de transmission (10).

6. Agencement de transmission (40) selon la revendication 5, comprenant en outre un train d'engrenages final (41) configuré pour raccorder l'agencement de transmission (40) à un essieu de roue (8) d'un groupe motopropulseur de véhicule (2) par l'intermédiaire d'un différentiel (9), le train d'engrenages final (41) étant agencé au niveau d'un arbre de sortie (23) de l'unité de boîte de vitesses à trains épicycloïdaux (20).

7. Groupe motopropulseur de véhicule (2) comprenant :
l'unité de transmission (10) selon l'une quelconque des revendications 1 à 5 ; et
une unité de propulsion (30, 32) raccordée au premier arbre de transmission (11) de l'unité de transmission (10).

8. Groupe motopropulseur de véhicule (2) selon la revendication 7, comprenant en outre une unité de boîte de vitesses à trains épicycloïdaux (20) raccordée au troisième arbre de transmission (13) de l'unité de transmission (10).

9. Groupe motopropulseur de véhicule (2) selon la revendication 8, dans lequel l'unité de transmission (10) a un plan longitudinal central transversal à l'axe de rotation du premier arbre de transmission (11) et un plan transversal central parallèle à l'axe de rotation du premier arbre de transmission (11), et dans lequel l'unité de propulsion (30, 32) et l'unité de boîte de vitesses à trains épicycloïdaux (20) sont agencées sur le même côté du plan longitudinal central de l'unité de transmission (10) et des côtés opposés du plan transversal central de l'unité de transmission (10).

10. Groupe motopropulseur de véhicule (2) selon l'une quelconque des revendications 7 à 9, comprenant en outre un essieu de roue (8) raccordé à une roue motrice (7) du groupe motopropulseur de véhicule (2), et dans lequel l'unité de propulsion (30, 32) est agencée entre l'unité de transmission (10) et l'essieu de roue (8) comme vu dans une direction longitudinale du groupe motopropulseur de véhicule (2).

11. Groupe motopropulseur de véhicule (2) selon l'une quelconque des revendications 7 à 9, comprenant en outre un essieu de roue (8) raccordé à une roue motrice (7) du groupe motopropulseur de véhicule (2), et un train d'engrenages final (41) raccordant un arbre de sortie (23) de l'unité de boîte de vitesses à trains épicycloïdaux (20) à l'essieu de roue (8) par l'intermédiaire d'un différentiel (9) du groupe motopropulseur de véhicule (2).

12. Groupe motopropulseur (2) pour véhicule selon la revendication 7, comprenant en outre un essieu de roue (8) raccordé à une roue motrice (7) du groupe motopropulseur de véhicule (2), et un train d'engrenages final (41) raccordant le troisième arbre de transmission (13) de l'unité de transmission (10) à l'essieu de roue (8) par l'intermédiaire d'un différentiel (9) du groupe motopropulseur de véhicule (2) .

13. Véhicule (1) comprenant le groupe motopropulseur de véhicule (2) selon l'une quelconque des revendications 7 à 12.
